# EUROPÄISCHE PATENTANMELDUNG

(11) **EP 2 048 295 A2**
(43) Veröffentlichungstag der Anmeldung: **15.04.2009**
(21) Anmeldenummer: 08017622.5
(22) Anmeldetag: 08.10.2008
(51) Int. Cl.: E04B 1/76

(54) **Holzfaser-Wärmedämmmaterial und Verfahren für desen Herstellung**

(30) Priorität: 09.10.2007 DE 102007048422
(71) Anmelder: Homatherm AG, 6340 Baar (CH)
(72) Erfinder:
(74) Vertreter: Stenger, Watzke & Ring

(57) **Zusammenfassung**

Die Erfindung betrifft ein biologisch abbaubares Wärmedämmmaterial. Um ein verbessertes biologisch abbaubares Wärmedämmmaterial zu schaffen, wird mit der Erfindung ein biologisch abbaubares Wärmedämmmaterial vorgeschlagen, enthaltend 50 bis 90 Gew.-% einer Zellulose- und/oder Holzfaser mit einem durchschnittlichen Faserdurchmesser von 1 mm oder weniger und einer durchschnittlichen Faserlänge von 20 mm oder weniger, 2 bis 15 Gew.-% eines flammhemmenden Mittels sowie 5 bis 30 Gew.-% eines biologisch abbaubaren Bindemittels in Form von Biko-Fasern mit einem durchschnittlichen Faserdurchmesser von 1 mm oder weniger und einer Faserlänge von 20 mm oder weniger, wobei die Dichte des Wärmematerials 30 bis 300 kg/m³ beträgt.

## Beschreibung

### Detailbeschreibung der Erfindung

### Technisches Gebiet

Die Erfindung betrifft ein biologisch abbaubares Wärmedämmmaterial, welches unter anderem Zellulose- und/oder Holzfasern und als Bindemittel dienende Biko-Fasern, das heißt Zweikomponentenfasern enthält.

Die vorliegende Erfindung betrifft ferner ein Holzfaser-Wärmedämmmaterial, das eine Wärmedämmungseigenschaft, eine thermische Entspannungseigenschaft, eine schalldämmende und feuerhemmende Eigenschaft, eine Feuerbeständigkeitseigenschaft, eine Schalldämmungseigenschaft, vorzugsweise die Eigenschaft einer abweisenden Wirkung auf Ameisen, eine Feuchtigkeitsregulierungseigenschaft, eine Umweltschutzeigenschaft und Entgiftungseigenschaften besitzt. Die Erfindung betrifft auch ein Verfahren zur Herstellung eines Wärmedämmmaterials durch die kombinierte Anwendung eines Trockenverfahrens und eines Halbtrockenverfahrens.

### Technischer Hintergrund

Holzfaserplatten umfassen eine Weichfaserplatte (Dämmplatte), die eine Dichte von weniger als 350 kg/m³ aufweist und die durch ein Nassverfahren hergestellt wird, bei dem ähnlich wie bei der Papierherstellung Schlamm verwendet wird, in dem Holzfaser, Bindemittel und Leimungsmittel in Wasser dispergiert sind, eine mitteldichte Holzfaserplatte (MDF), die hergestellt wird durch das Spritzen einer wässrigen Lösung, die Holzfaser, ein Melaminharzbindemittel und ein haftfest aufzubringendes wasserabweisendes Mittel enthält, und durch das Trocknen der Lösung durch ein Trockenverfahren mit einer Heizpresse, und ferner eine Hartfaserplatte (Hartplatte) mit einer Dichte von 800 kg/m³ oder mehr, die durch eine Erwärmung bei hohem Druck pressgeformt wird. Diese Platten werden verschiedentlich als Baumaterialien und Ausstattungmaterial im Haushalt verwendet.

Es wurden kürzlich viele verbesserte Technologien im Zusammenhang mit Energieeinsparung, Kostensenkung, Brandschutz, Insektenschutz, sowie Maßnahmen für gesundes Wohnen und Wiederverwertbarkeit veröffentlicht.

Zum Beispiel beschreibt die ungeprüfte Japanische Patentpublikation Nr. 2001-334510 eine Cost-Down-Technologie, mit welcher MDF-Platten mit geringer Dichte und unter Energieeinsparung erzielt werden, indem ein Gemisch, das Holzfaser und einen thermoplastischen Harzbinder enthält, zu einem Vlies geformt wird und das Bindemittel bei einer Temperatur, die höher ist als sein Erweichungspunkt, thermisch fixiert wird.

Die ungeprüfte japanische Patentpublikation Nr. 2002-337116 beschreibt ein Verfahren, bei welchem MDF in eine wässrige Lösung getaucht werden, in der Polyethylenglykol, ein Triazol-Ameisenabwehrmittel und Ammoniumphosphat in einem Phenolharz eine Mischung bilden, um die MDF schwer entflammbar und insektenbeständig zu machen.

Die ungeprüfte japanische Patentpublikation Nr. 2003-311717 beschreibt ein Recyclingverfahren, durch welches wiederverwertetes Material mit einer Dichte von 50 bis 250 kg/m³ und einer Feinheit von 0,01 bis 20 mm, die durch das Brechen einer gebrauchten Holzfaserplatte erzielt wird, mit dem Rohmaterial der MDF gemischt wird.

Die ungeprüfte japanische Patentpublikation Nr. 2006-289769 beschreibt ein Verfahren zur Herstellung der MDF mit einem Gewicht pro Schuss von 400 bis 2500 g/m² und einer Dicke von 2 bis 50 mm durch Laminieren eines Vliesstoffs, der erhalten wird durch das Mischen von Faser-Polylactat mit Zellulosefaser einer durchschnittlichen Faserlänge von 5 bis 100 mm.

### Problemstellung

Die vorstehend genannten Verbesserungstechnologien gehören zu den Verbesserungstechnologien einer Dämmplatte, die durch ein Nassverfahren hergestellt wird, oder zu denen von MDF, die durch ein Trockenverfahren hergestellt werden, und jede dieser Technologien entspricht der Wärmedämmung, der Nichtbrennbarkeit, Insektenbeständigkeit, Energieeinsparung, Kostensenkung und den Maßnahmen für eine Recyclefähigkeit, doch ist die momentane Situation die, dass damit kein Formungsverfahren und Herstellungsverfahren erreicht werden, mit denen die Probleme umfassend gelöst werden können.

Die vorliegende Erfindung sorgt für Eigenschaften wie beispielsweise Elastizität, mechanische Festigkeit, Schalldämmung, Flammhemmung und Feuerbeständigkeit sowie Ameisenabwehr, wie sie bei einer durch ein Nassverfahren hergestellten Dämmplatte nicht vorgefunden werden, wenngleich der Dichtebereich ähnlich jenem einer Dämmplatte ist, die durch das Nassverfahren und das Halbtrockenverfahren hergestellt wird, und sie verbessert die Wärmedämmung, die Feuchtigkeitsregulierungseigenschaft und die Maßnahme gegen ungesundes Wohnen und eine kranke Umwelt.

Hinsichtlich der flammenhemmenden und feuerbeständigen Eigenschaften erweisen sich ihre Leistungsmerkmale als äquivalent oder mehr als äquivalent zu einem Glaswolle-Wärmedämmelement und einem Steinwolle-Wärmedämmelement, und ebenso im Hinblick auf die Wärmedämmung werden eine thermische Entspannungseigenschaft, die eine Wärmeübertragung in einem unstabilen Zustand verzögert, die bei einem Schaumstoff-Wärmedämmelement nicht beobachtet wird, und eine hohe Wärmedämmung durch eine luftdichte adiabatische Konstruktion ermöglicht.

Ferner wird gebrauchtes Wärmedämmmaterial gemäß der vorliegenden Erfindung als Düngevlies in der Land- und Forstwirtschaft verwendet und trägt zur Aktivierung von Wäldern und zur Entgiftung der Umwelt bei und bildet eine Maßnahme gegen die globale Erwärmung.

Ferner kann ein filzförmiges Wärmedämmmaterial gemäß der vorliegenden Erfindung einer Zweitverwertung durch ein Befeuchtungs-Formpressen und Warmformen unterzogen werden und trägt als ökologisches Innenmaterial für Automobile zur Entwicklung eines neuen Gebiets bei.

### Problemlösung

Die vorliegende Erfindung löst umfassend die vorstehend genannten Probleme durch ein Wärmedämmmaterial, das eine Dichte von 300 kg/m³ oder weniger aufweist, die die gleiche ist wie die einer Dämmplatte, die durch ein Nassverfahren hergestellt wurde, wobei als Hauptmaterial durch ein Trockenverfahren und ein Halbtrockenverfahren eine Mischung hergestellt wird, die eine Holzfaser mit einem durchschnittlichen Faserdurchmesser von 1 mm oder weniger und einer durchschnittlichen Faserlänge von 20 mm oder weniger und ein in heißem Wasser quellendes und durch Wärme fixierendes biologisch abbaubares Bindemittel mit einer Feinheit von 10 dtex oder weniger und einer Faserlänge von 20 mm oder weniger umfasst.

Das durch das Herstellungsverfahren hergestellte Wärmedämmmaterial hat eine geringe Dichte und Elastizität und bietet aufgrund der luftdichten adiabatischen Konstruktion, die eine thermische Entspannungseigenschaft durch eine geringe Wärmeleitfähigkeit und eine hohe Wärmekapazität und Elastizität nutzt, eine hohe Wärmedämmung und Schalldämmung, wie man sie bei anorganischem Stapelfaser-Wärmedämmmaterial wie Glaswolle oder Schaumstoff-Wärmedämmmaterial wie extrudiertes und expandiertes Polystyrol nicht vorfindet.

Da die Holzfaser, die mit einem flammhemmenden, Ameisen abweisenden Mittel behandelt ist, das mit einer Düngerkomponente verdoppelt ist, ferner eine karburierte Wärmedämmschicht gegen Entzündung durch Feuer und Hitze auf der Oberfläche des Wärmedämmmaterials bildet und selbstlöschend ist, zeigt ein Wandelement in Verbindung mit einer Gipsplatte und dergleichen ausgezeichnete feuerhemmende und feuerbeständige Eigenschaften.

Da ferner die Rohmaterialien, aus denen das Wärmedämmmaterial zusammengesetzt ist, biologisch abbaubar sind und da das flammfeste Ameisenabwehrmittel die drei Düngerelemente für die Pflanzenaufzucht enthält, können sie einschließlich des Abfalls gebrauchter Dämmmaterialien als Düngevlies verwendet werden, ohne einen Ausfall durch Umpflanzungen. Sie zeigen auch eine Umweltreinigungsfunktion, die zu einem beschleunigten Wachstum der Saaten, zur Aktivierung der Wälder, zur Reduzierung von CO2 und zur Verhinderung einer globalen Erwärmung beiträgt.

Rohmaterialien, die in einem erfindungsgemäßen Wärmedämmmaterial zusammengesetzt sind, sowie ihre Produktformen und das Herstellungsverfahren werden nachstehend im Detail beschrieben.

### Ausführungsformen der Erfindung

Holzfaser, die ein erfindungsgemäßes Wärmedämmmaterial bildet, wird gewonnen durch die Behandlung von dünnen Hölzern wie Koniferen, zum Beispiel Silbertanne, Asibrica, Japanische Lärche, Zeder und Fichte und breitblättrige Bäume wie Buche, Ahorn und Sägezahneiche; den Holzspänen von altern Hölzern und zermahlener zäher Rinde von Bamus, Hanf und dergleichen mit flammhemmenden Ameisenabwehrmittein, verdoppelt mit einer Düngerkomponente, und deren Fibrillation.

Die Holzspäne und die Mahlprodukte werden erhalten durch das Schneiden von Hölzern in die Form dünner Stücke mit einer Länge von 10 bis 30 mm und einer Breite von 5 bis 15 mm und deren Behandlung mit einem später beschriebenen Veredlungsmittel.

Die Holzspäne und die Mahlprodukte, die mit einem flammhemmende Ameisenabwehrmittel behandelt sind, werden mit Dampf behandelt und durch Dampf und dergleichen weich gemacht und anschließend durch einen Refiner zerfasert, so dass sie einen durchschnittlichen Faserdurchmesser von 1 mm oder weniger und eine durchschnittliche Faserlänge von 20 mm oder weniger aufweisen, und zu Holzfasern weiter verarbeitet. Der Grund für einen durchschnittlichen Faserdurchmesser von 1 mm oder weniger ist, für eine Elastizität des erhaltenen Wärmedämmmaterials zu sorgen und seine Wärmeleitfähigkeit zu verringern. Der Grund für eine durchschnittliche Faserlänge von 20 mm oder weniger ist die Unterdrückung der Granulation von benachbarten Fasern und die Erzeugung von Flusen während eines Schrittes des Mischens mit einem später beschriebenen faserförmigen Bindemittel in einem Trockenverfahren und deren gleichmäßiges Mischen durch Dispersion. Die gleichmäßige Dispersion ist angemessen in einem Bereich von 10 bis 300 UD (Faserlänge/Faserdurchmesser), und die Faserlänge beträgt vorzugsweise 20 mm oder weniger.

Die Wärmeleitfähigkeit des Wärmedämmmaterials mit einer Dichte von 30 bis 150 kg/m³, das unter diesen Bedingungen hergestellt wurde, lag mit 0,038 W/mK niedrig und zeigte einen hohen Wärmevolumenwert einer spezifischen Wärme von 2000 J/KgK.

Das mit einer Düngerkomponente verdoppelte flammhemmende Ameisenabwehrmittel, weiches der Hauptbestandteil des Wärmedämmmaterials der vorliegenden Erfindung ist, wird in einem Zustand gemischt, in dem eine Tauchbehandlung der Holzfaser durchgeführt wird. Das mit einer Düngerkomponente verdoppelte flammhemmende Ameisenabwehrmittel verleiht dem erfindungsgemäßen Wärmedämmmaterial eine Flammhemmung und Nichtbrennbarkeit und einem Verbundelement mit einer Gipsplatte und dergleichen eine feuerhemmende und feuerbeständige Eigenschaft, und es sorgt für eine ameisenabwehrende Eigenschaft als Maßnahme gegen Termitenfraß. Ferner ist das flammhemmende Ameisenabwehrmittel mit einer Düngerkomponente verdoppelt, die als Düngevlies und als Matte für die Aufzucht von Setzlingen in der Landwirtschaft verwendet werden kann und gebrauchtes Wärmedämmmaterial enthält. Das mit einer Düngerkomponente verdoppelte flammhemmende Ameisenabwehrmittel ist ein Gemisch aus einer Borverbindung und einer Phosphorverbindung und enthält speziell Borsäure, Borax, Borsilikat, Ammoniumpolyphosphat, Ammoniumdihydrogenphosphat, Magnesiumpolyphosphat, Kaliumpolyphosphat, Natriumhypophosphit und Natriumsulfit als Lösungshilfe und Kaliumkarbonat und Magnesiumchlorid als Fixierhilfe. Wenn eine immersionsadhärente Menge für die Holzfaser 2 Gew.-% oder weniger beträgt, sind die flammhemmende Wirkung und die Ameisen abwehrende Wirkung inadäquat, und bei 30 Gew.-% oder mehr tritt eine Sättigungswirkung ein, die eine Teuerung zur Folge hat, weshalb 2 bis 30 Gew.-% als angemessen gelten.

Das biologisch abbaubare Bindemittel, das den Hauptbestandteil des erfindungsgemäßen Wärmedämmmaterials bildet, ist ein natürliches und synthetisches Bindemittel und umfasst eine Mischung eines heißwasserlöslichen Klebebinders, der für ein Nassverfahren und für ein Halbtrockenverfahren geeignet ist, und eines hydrophoben thermisch fixierenden Binders, und ist auf ein biologisch abbaubares Bindemittel in Faserform beschränkt.

Das natürliche und das synthetische heißwasserlösliche Bindemittel enthält eine natürliche Stärke, Zellulosederivate und Chitosan, und das synthetische heißwasserlösliche Bindemittel enthält ideal verseiften Polyvinylalkohol, einen siliziumhaltigen Polyvinylalkohol und dergleichen. Es entspricht einem Bindemittel, das faserunterstützt ist, beispielsweise durch Holzfaser, oder einem faserförmigen Bindemittel.

Das synthetische hydrophobe thermisch fixierende Bindemittel enthält Polycaprolactam-Polyamid, Polyactic Acid, aliphatische Polyesterharze wie Polybutylensuccinat, Polybutylensuccinat-Adipat und ein biologisch abbaubares Polyethylen-Polypropylen-Verbundharz, das faserförmig ist.

Das faserförmige Bindemittel ist auf einen faserunterstützen Bindemitteltyp beschränkt, mit einer Feinheit von 10 dtex oder weniger und einer Faserlänge von 20 mm oder weniger, oder auf ein faserförmiges Bindemittel, um die homogene Mischung des Rohmaterials durch Dispersion, den Feinheitsgrad des Gemisches und die Eigenschaft eines flockigen Niederschlags und einer Verteilung in dem Trockenverfahren und dem Halbtrockenverfahren, welches die Formungsverfahren der vorliegenden Erfindung sind, sicherzustellen.

Die Hauptbestandteile der Zusammensetzung gemäß vorliegender Erfindung umfassen die Holzfaser, das flammhemmende Ameisenabwehrmittel, verdoppelt mit einer Düngerkomponente, und die biologisch abbaubaren heißwasserlöslichen und thermisch fixierenden faserförmigen Bindemittel, die vorstehend erläutert wurden. Es kann eine geeignete Mischung hergestellt werden aus umweltverträglichen Zusatzstoffen wie ein wasserabstoßendes fluorchemisches Agens, ein wasserabweisendes Silikonöl-Agens, Alkylketendimer als Leimstoff, ein antibakterielles Mittel, bei welchem antibakteriell wirkende Substanzen wie Kupfer und Zink aus Kalziumphosphat als Träger und Fungizide wie Hinokitiol und Chitosan als weitere Zusatzstoffe.

Ein Vlies und eine Leichtbauplatte aus dem erfindungsgemäßen Wärmedämmmaterial können durch ein Verfahren hergestellt werden, bei welchem das nachstehend beschriebene Trockenverfahren und Halbtrockenverfahren in Kombination zur Anwendung kommen, wobei sich dieses Vlies und diese Leichtbauplatte von der Dämmplatte unterscheiden, die durch ein Nassverfahren hergestellt wird, und von der MDF-Platte, die durch ein Trockenverfahren hergestellt wird.

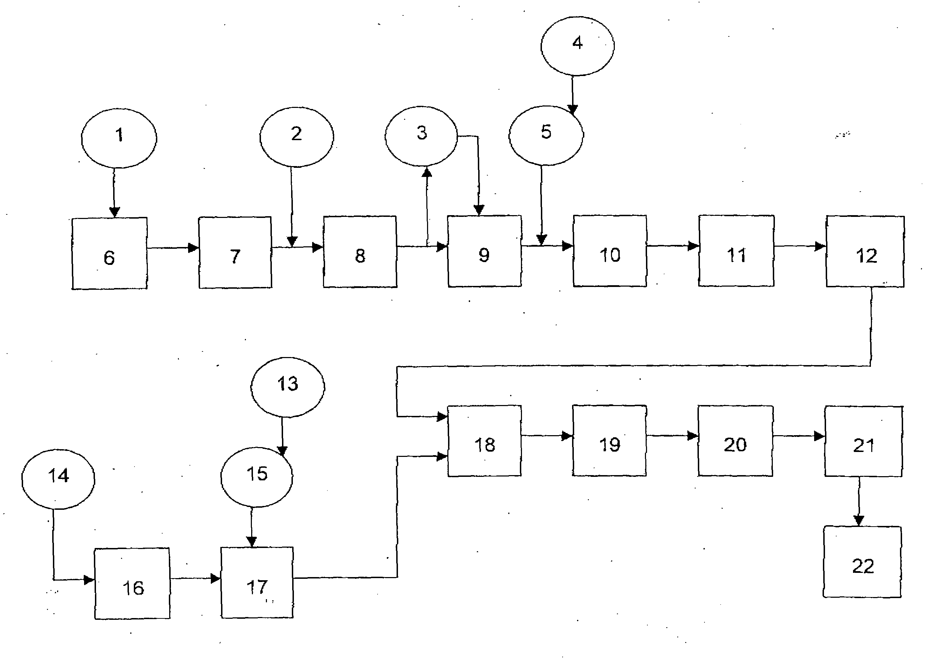

Das Herstellungsverfahren gemäß der vorliegenden Erfindung ist in dem Flussdiagramm von Figur 1 dargestellt.

Holzspäne 1 mit einer Länge von 15 bis 25 mm, einer Breite von 5 bis 10 mm und einer Dicke von 2 bis 5 mm, die gewonnen werden durch das Schälen der äußeren Baumrinden von dünnen Hölzern und alten Hölzern von Koniferen und breitblättrigen Bäumen, die bei 6 einer normalen Temperatur bis 80°C für eine Dauer von 2 bis 24 Stunden in eine eine Borverbindung und eine Phosphorverbindung enthaltende wässrige Lösung oder Suspension getaucht werden, bei einem Dampfdruck von 0,5 bis 1 MP für eine Dauer von 5 bis 20 Minuten mit Dampf behandelt werden und bei 8 mit einem Ein- oder Zweischeiben-Refiner sukzessive fibrilliert werden. Der durchschnittliche Faserdurchmesser, die durchschnittliche Faserlänge und die Ausstoßrate der Holzfaser können durch die Änderung der Drehzahl des Refiners und durch eine Änderung des Abstands zwischen den feststehenden Messern und den sich drehenden Messern gesteuert werden. Den Holzspänen 1 kann gegebenenfalls ein erstes Bindemittel 2, das biologisch abbaubar ist, zugegeben werden.

Die bei 7 mit dem flammhemmenden Ameisenabwehrmittel, das mit einer Düngerkomponente verdoppelt ist, behandelte Holzfaser, die in einem Verfeinerungsschritt hergestellt wird, wird vorübergehend durch Komprimieren als Flockenballen verpackt, der erforderlichenfalls bei 9 mit einem Feuchtigkeitsgehalt von 15 Gew.-% befeuchtet wird, oder sie wird in einem nächsten Schritt zur Vermischung durch Dispersion einem Trommelsieb zugeführt.

Das Trommelsieb, das die Holzfaser 3, das biologisch abbaubare Bindemittel 5 und andere Zusatzstoffe 4 mischt, ist ein konischer, trapezförmiger Rotator, der an seiner äußeren Peripherie ein metallisches Maschennetz aufweist. Die aufgegebenen Rohmaterialien des Wärmedämmmaterials werden kontinuierlich gerührt und in Richtung auf eine Auslassöffnung bei 10 gemischt und durch die Differenz zwischen den Umfangsgeschwindigkeiten der Aufgabeöffnung auf der kleineren Durchmesserseite und der Auslassöffnung auf der größeren Durchmesserseite abgegeben. Das in diesem Schritt zerkleinerte Produkt aus den Rohmaterialien wird separiert, um durch das Metallnetz an der äußeren Peripherie abgeführt zu werden.

Die durch das Trommelsieb gemischten und dispergierten Rohmaterialien des Wärmedämmmaterials werden durch pneumatische Förderung bei 11 in eine Kammer zum Sammeln des flockigen Niederschlags transportiert, die ein Maschenband aufweist, das auf der Rückseite mit einer Saugvorrichtung versehen ist, und sie werden durch ein Trockenverfahren aufgesammelt, um zu dicken Vliesen geformt zu werden. Die Vliese werden dann auf ein endloses Transportförderband umgeladen und dann durch Formpressen bei 12 in einen Zustand mit annähernd fester Dicke und Dichte gebracht, und anschließend wird ein Bindemittel 5, welches ein faserförmiges heißwassenösliches Bindemittel ist, durch Feuchtigkeit zum Quellen gebracht, um die Fasern untereinander zu binden und um den Vliesen eine Formhaltigkeitseigenschaft und eine Elastizität zu verleihen. In dem Halbtrockenverfahren wird die Dichte der oberen und unteren Schicht des Vlieses auf mehr als die Dichte einer Zwischenschicht erhöht, indem eine weitere Hochdruckformung durchgeführt wird, und es wird eine Dreischichtenstruktur mit unterschiedlichen Dichten gebildet.

Anschließend wird das faserförmige Bindemittel 5 thermisch fixiert, während es mit einem mobilen Förderer durch das Trockenverfahren einer Pressformung unterzogen wird, und das Vlies erhält die Form des Festigkeit und Elastizität aufweisenden Endprodukts. Das faserförmige Bindemittel 5 ist beispielsweise durch Biko-Fasern bereitgestellt.

Das durch das Trockenverfahren und Halbtrockenverfahren aus dem Wärmedämmmaterial hergestellte Vlies und die Platte haben ein gutes Aussehen, sind gleichmäßig und besitzen Festigkeit in einer Dickenrichtung; sie verfügen über eine Wärmedämmeigenschaft (geringe Wärmeleitfähigkeit), sind flammehemmend und feuerbeständig, verfügen über eine Ameisenabwehrwirkung, sind schalldämmend, feuchtigkeitsregulierend, VOC-frei und besitzen die Eigenschaften eines Düngematerials.

Der Filz aus dem erfindungsgemäßen Wärmedämmmaterial kann durch das später beschriebene energiesparende Trockenverfahren hergestellt werden.

Der Filz vorliegender Erfindung ist ein Filz, der erhalten wird durch die Herstellung des Papiers durch das Trockenverfahren aus einem Gemisch, das die vorstehend beschriebene Zusammensetzung enthält, durch das Formen eines Filzes mit einer Dicke von 2 bis 10 mm und einer Dichte von 200 bis 300 kg/m³ durch die vorstehend genannte Nass-Adhäsion und die thermisch fixierende Adhäsion, durch das Aufkaschieren eines handelsüblichen biologisch abbaubaren Vliesstoffs auf eine oder beide Seiten des Filzes und durch das Vernadeln, wobei der Filz eine feste Länge erhält oder aufgerollt wird.

Der Filz kann durch ein ähnliches Verfahren wie bei der Papierherstellung hergestellt werden, doch ist es vorteilhaft, aus Gründen der Energieeinsparung und einer Kosteneinsparung bei der Herstellung das Papier durch das Trockenverfahren und das Halbtrockenverfahren herzustellen.

In einem Nassverfahren, das ähnlich ist wie das Papierherstellungsverfahren, kann ein Filz mit einer Dicke von 2 bis 10 mm durch ein Rundnetz-, Langnetz- oder Trichter-Formungssystem unter Verwendung eines wässrigen Schlamms, in dem die vorstehend genannten Rohmaterialien des Wärmedämmmaterials mit einer Konzentration von 1 bis 5 Gew.-% verteilt sind, hergestellt werden.

In dem Trockenverfahren, das die trockene Papierherstellung einschließt, werden die Rohmaterialien des Wärmedämmmaterials durch den Luftstrom des Luftlegesystems, das von M&J Fibertech Co. in Dänemark und Danweb Co entwickelt wurde, dispergiert und können zu einem Filz geformt werden, der eine Dicke von 2 bis 10 mm hat.

Der Filz wird vorbereitend in dem Nassverfahren getrocknet, doch wird der Filz durch Befeuchtung mit Dampf in dem Trockenverfahren auf einen Feuchtigkeitsgehalt von etwa 15 Gew.-% eingestellt. In einem darauffolgenden Schritt werden die Fasern durch die Nass-Adhäsion und durch thermisch fixierende Adhäsion des faserförmigen Bindemittels des Filzes untereinander verklebt, um einen weichelastischen Filz zu bilden, ähnlich wie bei dem Trockenverfahren und bei dem Halbtrockenverfahren.

Um den Filz handhabbar zu machen, wird ferner ein handelsüblicher Faserstoff mit einem Gewicht pro Schuss von 20 bis 100 g/m² (z.B. TERRAMAC von Unitika Ltd.) auf eine oder auf beide Seiten des Filzes aufkaschiert, vemadelt und zu einem Filz endverarbeitet, der praktisch eine Festigkeit derart besitzt, dass er aufgerollt werden kann.

Das fertige Wärmedämmprodukt 22 kann schließlich als Platte ausgebildet sein, das letztendlich aus einem Vlies besteht, der ein- wie anderendseitig mit Filz belegt sein kann. Der Filz kann aus den Ausgangsstoffe Holzfasern 14, biologisch abbaubaren Bindemittel 15 und gegebenenfalls Zusatzstoffen 13 gebildet sein, die bei 16 im Trockenverfahren verarbeitet und bei 17 zu Filz weiterverarbeitet werden. Das zuvor ausgebildete Vlies wird mit dem ausgebildeten Filz verbunden, wobei in einem ersten Schritt 18 eine Befeuchtung und eine Warmformung durch das Halbtrockenverfahren und in einem zweiten Schritt 19 eine Warmformung durch das Trockenverfahren stattfinden kann. Es können schlussendlich bei 20 noch ein Schritt der Feuchtigkeitsregulierung und Aushärtung und gegebenenfalls bei 21 ein Schritt des Zuschneidens und der Endbearbeitung zur Ausbildung des Wärmeproduktes 22 vorgesehen sein.

Die vorliegende Erfindung wird nachstehend anhand von Beispielen dargestellt, durch welche die Erfindung jedoch nicht eingeschränkt wird.

### Beispiel 1

### Holzfaser

Die Rinden von getrockneten, dünnen Hölzern wie Asibrica, Japanische Lärche und Zeder wurden entfernt, und Holzspäne mit einer Länge von etwa 20 mm, einer Breite von etwa 15 mm und einer Dicke von 2 mm wurden über eine Dauer von 24 Stunden in die Heißwasserlösungen getaucht:
1) Wässrige Suspensionslösung mit 10 Gew.-% Borsäure, 2 Gew.-% Borax, 1 Gew.-% Kaliumphosphat und 10 Gew.-% Ammoniumpolyphosphat und
2) Wässrige Lösung mit 10 Gew.-% Borsäure, 1 Gew.-% Kaliumkarbonat und 15 Gew.-% Ammoniumdihydrogenphosphat.

Die behandelten Holzspäne wurden mit bei einem Dampfdruck von 1 MPa über eine Dauer von 10 Minuten gedämpft, in einen Zweischeiben-Refiner aufgegeben und bei einer Drehzahl von 800 U/min und einem Abstand von 2 mm fibrilliert, wobei jedoch zu diesem Zeitpunkt ein pulverförmiges Bindemittel beigemengt wird, falls dies erforderlich ist (später beschrieben). Danach wurde die Befeuchtungsbehandlung durchgeführt, um eine ein Holzfaser herzustellen, die mit einem flammhemmenden Ameisenabwehrmittel, verdoppelt mit einer Düngerkomponente, behandelt ist und die einen durchschnittlichen Faserdurchmesser von 0,2 mm und eine Faserlänge von 20 mm hat. Für die Holzfasern, die von den verschiedenen Bäumen und mit den verschiedenen Behandlungslösungen gewonnen wurden, wurden Codes vorgesehen, die in der folgenden Tabelle 1 angegeben sind.

**Tabelle 1**

| Codeabkürzungen für Holzfasern, die mit flammhemmenden Ameisenabwehrmitteln, verdoppelt mit einer Düngerkomponente, behandelt sind | | |
|---|---|---|
| Baumart | Behandlungsmittel 1 | Behandlungsmittel 2 |
| Asibrica | A-1 | A-2 |
| Japanische Lärche | B-1 | B-2 |
| Zeder | C-1 | C-2 |

### Faserförmiges Bindemittel

Poval-Harzpulver mit einem idealen Verseifungsgrad (POVAL V-20, hergestellt von JAPAN VAM & POVAL Co., Ltd.) wurde mit den Holzfasern (A-1 und A-2) mit einem Anteil von 10 Gew.-% pulverförmig gemischt, um ein pulverförmiges Bindemittel (1) herzustellen, das mit den mit Poval-Harz überzogenen Holzfasern kombiniert wurde. Faserförmige Bindemittel aus heißwasserlöslicher Poval-Faser (VINYLON VPB, hergestellt von Kuraray Co., Ltd.) (2), die eine Feinheit von 5 dtex und eine Schnittlänge von 20 mm aufweisen, und eine biologisch abbaubare thermisch fixierende Polyolefin-Verbundfaser (ES FIBER VISION, biologisch abbaubare ES-Faser) (3) mit einer Feinheit von 3 dtex und einer Schnittlänge von 20 mm wurden bei einem Gewichtsverhältnis von (1): (3) = 5 : 1 (Code D) und einem Gewichtsverhältnis von (2) : (3) = 1 : 1 (Code E) gemischt, um die faserförmigen Bindemittel D und E herzustellen.

### Vliesbildung

Gemische, in denen die Holzfasern A, B und C und die faserförmigen Bindemittel D und E mit Gemischbildungsverhältnissen von Tabelle 2 gewichtet wurden, wurden in ein drehbares Trommelsieb mit Metallnetz mit Lochung 7, bei dem die Umfangsgeschwindigkeit einer Aufgabeöffnung 0,5 m/s und die Umfangsgeschwindigkeit einer Auslassöffnung 0,8 m/s betrug, aufgegeben und durch Mischen dispergiert, Während der durch Drehung erfolgenden Dispersion bewegen sich die Gemische von der Aufgabeöffnung zur Auslassöffnung, doch die pulversierten Teile des Rohmateriatgemisches wurden entfernt.

Die durch das Mischen homogen verteilten Rohmaterialien wurden durch pneumatische Förderung zu einer Sammelkammer gefördert (eine Einrichtung für den Flockeniederschlag, umfassend einen sich kontinuierlich bewegenden, endlosen Maschennetzförderer, der mit einer rückseitigen Saugbox ausgestattet ist) und wurden dann gesammelt und laminiert, um homogene und dicke Vliese zu bilden. Die dicken Vliese wurden zu einem sich auf und ab bewegenden Doppelförderer einer sich kontinuierlich bewegenden, endlosen Transportplatte transportiert und dort angeordnet, und es wurde durch das Trockenverfahren, das den Schritt der Änderung des Abstands zwischen dem sich auf und ab bewegende Förderer einschließt, eine Formpressung zu Vliesen einer annähernd festen Dicke durchgeführt.

### Vliesbindung

Die Vliese wurde vor und zurück zu einer unterteilten Zone auf dem Doppelförderer transportiert, die faserförmigen Bindemittel wurden in einem Temperaturbereich von 70 bis 100°C durch das Halbtrockenverfahren, durch welches Dampf aus dem sich auf und ab bewegenden Förderer ausgestoßen wird, mit den Holzfasern nass kaschiert, und es wurden geformte, handhabbare Primärvliese hergestellt.

Anschließend wurden die geformten Primärvliese zu Wärmedämmmaterialien mit einer geeigneten Festigkeit und Elastizität endverarbeitet, indem die Vliese durch das Trockenverfahren erwärmt wurden, durch welches ein heißer Luftstrom von dem sich auf und ab bewegenden Förderer ausgestoßen wurde, während sie ähnlich wie in dem vorhergehenden Schritt in einer unterteilten Zone zu ihrer Enddicke komprimiert wurden, und indem die Holzfasern mit dem faserförmigen Bindemittel in einem Temperaturbereich von 100 bis 150°C thermisch fixiert wurden.

### Auswertung der Wirksamkeit des versuchsweise hergestellten Wärmedämmmaterials

Das Gemischbildungsverhältnis, die Dicke und Dichte der Holzfasern, das flammhemmende Ameisenabwehrmittel und die faserförmigen Bindemittel wurden in den vorgenannten Verfahren geändert, um die Wärmedämmmaterialien gemäß Tabelle 2 herzustellen.

**Tabelle 2 Gemischbildungsverhältnis, Dicke und Dichte von Wärmedämmmaterialien**

| Versuchsprobe Nr. | Zusammensetzungsmaterial | | Gemischbildungverhältnis (Gew.-%) Holzfaser: Bindemittel | Wärmedämmmaterial | |
|---|---|---|---|---|---|
| | Holzfaser | Bindemittel | | Dicke (mm) | Dichte (kg/m³) |
| 1 | A-1 | D | 90 : 10 | 50 | 55 |
| 2 | A-1 | E | 90 : 10 | 50 | 55 |
| 3 | A-1 | D | 80 : 20 | 50 | 55 |
| 4 | A-2 | E | 80 : 20 | 50 | 55 |
| 5 | B-1 | D | 90 : 10 | 50 | 40 |
| 6 | B-2 | E | 90 : 10 | 50 | 80 |
| 7 | C-1 | D | 90 : 10 | 25 | 160 |
| 8 | C-2 | E | 90 : 10 | 25 | 160 |

Die Wärmeleitfähigkeit des Wärmedämmmaterials von Tabelle 2 wurde jeweils gemäß der Platten-Direktmethode nach JIS A-1412 gemessen, und die spezifische Wärmekapazität wurden nach der Kohlrausch Flüssigkalorimetrie gemessen.

Die elastischen Rückstelleigenschaften des Wärmedämmmaterials wurden ausgewertet nach Elastizität ((A): gute, (B): normale und (C): schlechte Rückstellung) und nach der Rückstellrate (%). Die Ergebnisse, die erhalten wurden, sind in Tabelle 3 angegeben.

**Tabelle 3 Wirksamkeit von Wärmedämmmaterial gemäß der vorliegenden Erfindung**

| Versuchsprobe Nr. | Wärmeleitfähigkeit (W/mK) | Spezifische Wärme (J/kgK) | Mechanische Eigenschaften | |
|---|---|---|---|---|
| | | | Elastizität | Rückstelleigenschaft |
| 1 | 0,038 | 2080 | (A) | 100% |
| 2 | 0,038 | 2080 | (A) | 100% |
| 3 | 0,038 | 2080 | (A) | 100% |
| 4 | 0,038 | 2080 | (A) | 100% |
| 5 | 0,039 | 2070 | (A) | 100% |
| 6 | 0.039 | 2090 | (A) | 100% |
| 7 | 0,040 | 2100 | (B) | 100% |
| 8 | 0,040 | 2100 | (B) | 100% |

Die versuchsweise hergestellten Wärmedämmmaterialien zeigten gemäß Tabelle 3 ein gutes Ergebnis hinsichtlich der Wärmedämmung und Elastizität.

### Beispiel 2

Die Proben Nr. 1 und Nr. 2 von Beispiel 1 wurden auf ein Maß von 10 cm x 10 cm x 2 cm und 4 Seiten geschnitten, und ihr Boden wurde mit einer Aluminiumfolie beschichtet, um Probenkörper vorzubereiten. Die flammhemmenden Eigenschaften der Probenkörper wurden gemäß CCM (Cone-Kalorimetrie) anhand der öffentlichen Mitteilungsblatt Nr. 9, Artikel 2 des Baunormengesetzes ausgewertet, und das Ergebnis betrug 5.2 MJ/10 min. und 6.5 MJ/20 min. und sie wurden als quasi-entflammbar und entflammbar zugelassen.

### Beispiel 3

Vergleich der Wärmedämmwirkung des versuchsweise hergestellten Wärmedämmmaterials mit jener von Glaswolle-Wärmedämmmaterial

Die Wärmedämmwirkung des Wärmedämmmaterials Nr. 6 von Beispiel 1 mit einer Dichte von 80 kg/m³ wurde mit jener eines Glaswoll-Wärmedämmmaterials mit einer Dichte von 16 kg/m³ verglichen, und das Ergebnis ist in Tabelle 4 gezeigt.

**Tabelle 4 Vergleich der Wärmedämmwirkung des versuchsweise hergestellten Wärmedämmmaterials mit jener von Glaswolle-Wärmedämmmaterial**

| Wärmedämmaterial | Dichte (kg/m³) | Wärmeleitfähigkeite (W/mK) | SpezifischWärme (J/kgK) | Temperaturleitfähigkeit (cm²/h) | Mechanische Eigenschaft | |
|---|---|---|---|---|---|---|
| | | | | | Elastizität | Rückstell igenschaf t |
| Erfindungsgemäßes Wärmedämmaterial | 80 | 0,038 | 2000 | 10 | (A) | 100% |
| GlaswolleWärmedämmmaterial | 16 | 0,038 | 1000 | 60 | (C) | 100% |

Aus Tabelle 4 ist ersichtlich, dass die Wärmeleitfähigkeit, die den Grad der Wärmeübertragung unter einem stabilen Zustand (Umgebung, in der sich die Außentemperatur nicht ändert) des versuchsweise hergestellten Wärmedämmmaterials zeigt, die die gleich ist wie die des Glaswolle-Wärmedämmmateriels, dass aber die Temperaturleitfähigkeit, die eine Wärmeübertragung unter einem nichtstabilen Zustand (Umgebung, in der sich die Außentemperatur ändert) zeigt, nur 1/6 beträgt und dass die Wärmeübertragung in einer Umgebung mit sich ändernder Außentemperatur stark herabgesetzt wird.

### Beispiel 4

Vergleich der Schalldämmung des versuchsweise hergestellten Wärmedämmmateriats mit jener von Glaswolle-Wärmedämmmaterial

Die Schalldämmungsrate gemäß der Nachhall-Methode nach JIS A-1049 wurde bei dem versuchsweise hergestellten Wärmedämmmaterial Nr. 2 von Beispiel 1, das eine Dichte von 55 kg/m³ und eine Dicke von 50 mm aufweist, und bei dem Glaswolle-Wärmedämmmaterial, das ein Dichte von 48 kg/m³ und eine Dicke von 50 mm aufweist, unter der Bedingung einer Haftung an einer starren Wand ohne Luftschicht an der Rückseite gemessen, und das Ergebnis ist in Tabelle 5 gezeigt.

**Tabelle 5 Vergleich der Schalldämmung des versuchsweise hergestellten Wärmedämmmaterials mit jener von Glaswolle-Wärmedämmmaterial**

| Wärmedämmmaterial | Frequenz | | | | | |
|---|---|---|---|---|---|---|
| | 125 Hz | 160 Hz | 200 Hz | 250 Hz | 500 Hz | 1000 Hz |
| Erfindungsgemäßes Wärmedämmmaterial | 16% | 39% | 65% | 84% | 100% | 100% |
| GlaswolleWärmedämmmaterial | 16% | 35% | 48% | 60% | 95% | 100% |

Wie aus Tabelle 5 hervorgeht, zeigt das versuchsweise hergestellte Wärmedämmmaterial verglichen mit dem Glaswolle-Dämmmaterial ein gute Schalldämmungswirkung in einem niedrigen Frequenzbereich, was Elastizität erkennen lässt.

### Beispiel 5

Auswertung der Feuerbeständigkeitswirkung und Schalldämmungswirkung des versuchsweise hergestellten Wärmedämmmaterials

Die beiden Lagen des versuchsweise hergestellten Wärmedämmmaterials Nr. 4 von Beispiel 1 wurden in einer leicht großen Abmessung zwischen zwei hölzerne Stempel eines Prüfrahmens mit Holzachsen mit einer Körperdifferenz von 100 x 100 mm, einem Pfosten von 100 x 100 mm und einem hölzernen Stempel von 100 x 50 mm eingesetzt und mit einer Heizdehnungspappe (BLGR, hergestellt von MARUSAN PAPER MFG. CO., LTD.) gemischt mit Graphit mit einer Dicke von 2 mm verklebt, und der Stempelabstand betrug 455 mm, und es wurden die Feuerbeständigkeitswirkung und die Schalldämmungswirkung einer Trennwand, die mit einer Gipsplatte einer Dicke von 12,5 mm auf beiden Seiten verkleidet war, ausgewertet.

Die Feuerbeständigkeitswirkung wurde bestimmt durch die Durchführung des Feuerwiderstandstests gemäß dem öffentlichen Mitteilungsblatt Nr.1358 des Bauministeriums anhand der Normbrandkurve ISO 834. Das Ergebnis war eine Durchschnittstemperatur von 132°C und die maximale Temperatur von 145°C auf der nichterhitzten Frontseite, und sie wurde anerkannt als 45 Minuten halbfeuerfest.

Ferner wurde der Schallübertragungsverlust der Platte mit der Nachhallmethode gemäß JIS A-1419 gemessen. Das Ergebnis zeigte eine gute Schalldämmungswirkung in der Schalldämmungsklasse D-50.

### Beispiel 6

Auswertung der Feuchtigkeitsregulierungswirkung des versuchsweise hergestellten Wärmedämmmaterials

Die versuchsweise hergestellten Wärmedämmmaterialien Nr. 4, 6 und 8 von Beispiel 1 wurden auf 100 x 100 mm zugeschnitten und hatten vier Seiten und ihre Rückfläche wurde mit einem Aluminiumhaftstreifen verschlossen. Sie wurden bei 45°C für eine Dauer von 24 Stunden getrocknet und anschließend bei 25°C und 50% RH für eine Dauer von 72 Stunden ausgehärtet, um die feuchtigkeitsaufnehmende und -abgebende Wirkung zu messen.

Die Messbedingungen für die feuchtigkeitsaufnehmende und die feuchtigkeitsabgebende Wirkung waren eine Feuchtigkeitsaufnahme bei 25°C und 90% RH über 24 Stunden und anschließend eine Feuchtigkeitsabgabe bei 25°C und 50% RH über 24 Stunden, was einem Zyklus entsprach. Es wurden drei Zyklen durchgeführt. Die Feuchtigkeitsaufnahme und die Feuchtigkeitsabgabe wurden gemessen, und das Ergebnis ist in Tabelle 6 gezeigt.

**Tabelle 6 Feuchtigkeitsregulierungswirkung von erfindungsgemäßem Wärmedämmmaterial**

| Wärmedämmmaterial | Feuchtigkeitsaufnahmemenge (g/m²) | Feuchtigkeitsabgabemenge (g/m²) |
|---|---|---|
| Nr. 1 | 297 | 291 |
| Nr. 2 | 411 | 406 |
| Nr. 3 | 403 | 398 |

Tabelle 6 zeigt, dass die Materialien Feuchtigkeit gemäß der Umgebungstemperatur aufnehmen und abgeben und dass sie eine Feuchtigkeitsregulierungswirkung aufweisen, die gleich oder höher ist als die von einem Fichtenmaterial.

Weiterhin wurde festgestellt, dass die Oberfläche, wenngleich sie sich in einem feuchtigkeitsaufnehmenden Zustand leicht feucht anfühlt, kein Taukondensat aufweist und dass sich die Oberfläche in einem feuchtigkeitsabgebenden Zustand glatt und trocken anfühlt. Deshalb entsteht kein Pilz, und das Problem eines Pilzwachstums ist gelöst.

### Beispiel 7

Auswertung der Trittschalldämmungswirkung des versuchsweise hergestellten Wärmedämmmaterials

Das Wärmedämmmaterial Nr. 4 von Beispiel 1 mit einer Dicke von 50 mm wurde durch das Einsetzen zwischen Trägerbalken auf einem Boden (A) vorgesehen, wobei auf der Oberfläche der exponierten Trägerbalken ein 50 mm dickes Bodenbelagsmaterial aus Holz unter hoher Spannung und in einem realen Prozess vorgesehen wurde, so dass der Spalt zwischen der Oberseite der Trägerbalken und dem Wärmedämmmaterial eine Luftschicht war, und ferner wurde eine 12,5 mm dicke Gipsplatte als Schicht an der Unterfläche der Trägerbalken vorgesehen, um einen Boden (B) zu schaffen. Der Boden wurde durch eine Beutelmaschine beaufschlagt, und das gedämpfte Schlaggeräusch wurde in einem entsprechenden unteren Raum gemessen.

Die Messmethode wurde gemäß JIS A-1418 durchgeführt (Messung des Trittschallpegels in einem Gebäude). Der Trittschallpegel des Bodens (B) betrug 50 dB, und es zeigte sich eine gute Trittschalldämmungswirkung, während der Trittschallpegel des Bodens (A) 71 dB betrug.

### Beispiel 8

### Auswertung der Ameisenabwehr von Wärmedämmmaterial

Die Prüfung des Schadens durch Haustermitenfraß (Coptotemus Formasanus) wurde in einer Umgebung von 25°C und 75% RH einen Monat lang durchgeführt, wobei Probenkörper (n = 3) verwendet wurden, die hergestellt wurden, indem das versuchsweise hergestellte Wärmedämmmaterial Nr. 4 von Beispiel 1 mit einer Dichte von 55 kg/m³, ein durch Extrusion hergestelltes geschäumtes Polystyrol-Wärmedämmmaterial mit einer Dichte von 28 kg/m³ und ein Glaswolle-Wärmedämmmaterial mit einer Dichte von 16 kg/m³ auf eine Größe von 2 x 2 x 2 cm zugeschnitten wurden. Die Ameisenabwehrwirkung wurde anhand der Gewichtsverringerungsrate ((A): 5% oder weniger, (B): 5 bis 10% und (C): 10% oder mehr) und durch visuelle Beobachtung ((A): gut, (B): es wurde ein Schaden festgestellt, der jedoch geringfügig war, und (C) es wurde ein Schaden festgestellt, der größer war). Das Ergebnis ist in Tabelle 7 gezeigt.

**Tabelle 7 Auswertung der Ameisenabwehr von Wärmedämmmaterial gemäß der vorliegende Erfindung**

| Wärmedämmmaterial | Gewichtsreduzierung | Visuelle Beobachtung |
|---|---|---|
| Erfindungsgemäßes Wärmedämmmaterial | (B) | (B) |
| Glaswolle Wärmedämmmaterial | (B) | (B) |
| Extrudiertes geschäumtes Polystyrol Wärmedämmmaterial | (C) | (C) |
| Zeder | (C) | (C) |

Das versuchsweise hergestellte Wärmedämmmaterial hatte anders als das Glaswolle-Wärmedämmmaterial keine 100% Ameisenabwehrwirkung, doch zeigte es eine vergleichbare Ameisenabwehrwirkung. Demzufolge wurde befunden, dass eine wirksame Maßnahme zur Abwehr von Ameisen durch eine Kombination mit Schaumglas mit Ameisenabwehrwirkung und durch eine teilweise Beschichtung mit einem Ameisenabwehrmittel möglich ist.

### Beispiel 9

Auswertung der Eigenschaft des versuchsweise hergestellten Wärmedämmmaterials als Baumaterial

Die Wärmedämmungskonstruktion wurde bei vier Einzelhäusern (Größenordnung etwa 200 m² und zwei Stockwerke) mit Holzfachwerk in Date City und Obihiro City in Hokkaido ausgeführt, wobei das versuchsweise hergestellte Wärmedämmmaterial Nr. 4 von Beispiel

1 mit einer Dichte von 55 kg/m³ und ein im Handel erhältliches Glaswolle-Wärmedämmmaterial mit einer Dichte von 16 kg/m³ und einer Dicke von 50 bis 10 mm verwendet wurden. Die Eigenschaften als Baumaterial (Verarbeitbarkeit, Verbauungsgeschwindigkeit und Behandlung von Abfallmaterial) und die Eigenschaft als Wohnmaterial (Wärmedämmung, Schalldämmung und Maßnahme für gesundes Wohnen) wurden ausgewertet. Die Bewertung durch einen Bauunternehmer und Bauherren wurde in Tabelle 8 zusammengefasst.

**Tabelle 8 Vergleich der Auswertung der Eigenschaft des erfindungsgemäßen Wärmedämmmeterials und des Glaswoll-Dämmmaterials als Baumaterial und deren Eignung als Wohnmaterial**

| Auswertungspunkte | | Erfindungsgemäßes Wärmedämmmaterial | Glaswolle Wärmedämmmaterial |
|---|---|---|---|
| Eigenschaft als Baumaterial | Verarbeitbarkeit | kein sensationelles Gefühl beim Schneiden und Verbauen des Wärmedämmmaterials am Ort; gut. | Sensationelles Gefühl beim Schneiden und Verbauen am Ort, Verarbeitung ist mühsam. |
| | Verbauungsgeschwindigkeit | Baugeschwindigkeit etwa um das 1,5 fache höher als bei Glaswolle | |
| | Behandlung von Abfallmaterial | Randteile werden zum Füllen von Spalten verwendet, geringer Anfall von Abfallmaterial. | Randteile fallen als zu entsorgender Abfall an. |
| Eigenschaft als Wohnmaterial | Wärmedämmung | Gut. Bei gleicher Dicke bessere Energieeinsparung als bei Glaswolle | Gut |
| | Schalldämmung | Überlegen als Schalldämmung. Überlegen als Schalldämmung und Aufprallschalldämmu ng sowie Trittschalldämmung und Dämmung von Regengeräuschen und Klopfgeräuschen | |
| | VOC Ungesundes Wohnen | Gegenmaßnahme nicht erforderlich | Die Verwendung des Typs F von Forster ist obligatorisch als Maßnahme gegen VOC |

Die Auswertung von Tabelle 8 zeigt, dass das versuchsweise hergestellte Wärmedämmmaterial sowohl hinsichtlich der Eigenschaft als Baumaterial als auch hinsichtlich der Eigenschaft als Wohnmaterial dem Glaswolle-Wärmedämmmaterial überlegen ist.

### Beispiel 10

### Herstellung von Wärmedämmfilz

Rohmaterial (A), bei welchem die durch die zusätzliche Zugabe von 0,5 Gew.-% des wasserabstossenden Mittels Polydimethylsiloxan in Nr. 1 von Beispiel 1 gewonnene Holzfaser (A-2) und das faserförmige Bindemittel E in einem Gewichtsverhältnis von 50 : 50 gemischt wurden, und das Rohmaterial (B), bei welchem sie mit 80 : 20 gemischt wurden, wurden durch ein Mischen mit einer Kardiermaschine fibrilliert und in ein Luftlegesystem einer Trockenpapiermaschine aufgegeben, um Vliese A und B einer Dicke von 5 mm und einem Flächengewicht von 750 g/m² zu formen.

Die erhaltenen Vliese A und B wurden auf die gleiche Weise wie in Beispiel 1 an einen Doppelförderer übergeben und auf 3 mm komprimiert, und es wurden eine Nass-Adhäsion und thermische Fixierung durch Dampfbefeuchtung und Erwärmung mit Heißluft durchgeführt. Ferner wurde ein im Handel erhältlicher Vliesstoff (TERRAMAC 50 g/m², hergestellt von Unitika Ltd.) aufkaschiert, und es wurde eine Vernadelung durchgeführt, um Filze A und B zu bilden.

Die erzielten Leistungsmerkmale der erhaltenen Filze A und B sind in Tabelle 9 gezeigt.

**Tabelle 9 Leistungsmerkmale des erfindungsgemäßen Wärmedämmmaterials (Filzes)**

| Betrachtungseinheit | Einheit | Filz A | Filz B |
|---|---|---|---|
| Dicke | mm | 3 | 3 |
| Flächengewicht | g/m² | 730 | 750 |
| Wärmeleitfähigkeit | W/mK | 0,045 | 0,045 |
| Zugfestigkeit | Kgf/20 mm Ø | 3,5 | 2,1 |
| Flexibilität | Tastempfindung | Gut. Aufrollbar | Gut. Aufrollbar |

Aus Tabelle 9 geht hervor, dass ein wärmedämmender und schalldämmender Filz hergestellt werden konnte, der sich aufrollen lässt und der sich von Matten und Platten unterscheidet.

### Beispiel 11

### Auswertung der Anpassungsfähigkeit beim Pressformen

Der Formungs- und Verarbeitungstest einer unebenen Form und einer gekrümmten Oberflächenform wurde bei Filz A von Beispiel 10 durchgeführt, um die Anpassungsfähigkeit als ein formbares Material mit Wärme- und Schalldämmungseigenschaften zu bestätigen, zum Beispiel als ein Material für das Innendach eines Kraftfahrzeugs und als Bodenisolator. Der Filz ließ sich durch Nass-Adhäsion und thermische Fixierung bei einer Temperatur von 150°C und einem Pressendruck von 1 bis 10 Kgf/cm² formen, und es wurden die Möglichkeit zur Verarbeitung zu einem räumlichen Gebilde und die Pressformbarkeit bestätigt.

### Beispiel 12

Auswertung eines Vlieses für die landwirtschaftliche Nutzung und natürliche Zersetzbarkeit

Das Vlies Nr. 4 von Beispiel 1 enthält N, P, K und B als Düngerkomponenten, und es wurden keine umweltbelastenden Substanzen nach DIN 38409, EPA 610 und DIN-EN120 nachgewiesen. Das Vlies wurde ferner als Pflanzenzuchtmatte und als Düngevlies für Saaten wie Reis und Weizen, für Früchte und Gemüse wie Tomaten, Gurken und Auberginen, Wurzelgemüse wie große Klette und für Kartoffeln verwendet. Das Pflanzenwachstum und die Ernte waren gut, ohne fortlaufende Beschädigung der Bepflanzung.

Ferner wurde das Vlies über drei bis vier Monate in Erde natürlich zersetzt, und es wurde bestätigt, dass kein negativer Faktor hinsichtlich der Aktivität von Bodenmikroorganismen vorhanden ist.

Wirkung der Erfindung

Das erfindungsgemäße Wärmedämmmaterial wird erhalten durch das Herstellen einer faserförmige Materialien enthaltenden Mischung durch ein Trockenverfahren und ein Halbtrockenverfahren. Es schafft ein Produkt mit guten Eigenschaften wie flache Erscheinung, Flexibilität, Elastizität und Handhabbarkeit von Vliesen, Platten und Filzen mit einer geringen Dichte von 40 bis 300 kg/m³.

Mit den Vliesen und Platten ist eine luftdichte Wärmedämmkonstruktion möglich, die eine Wärmedämmungseigenschaft, thermische Entspannungseigenschaft und Elastizität besitzt. Die Wärmedämmwirkung und die Energieeinsparung sind besser als die eines Glaswolle-Wärmedämmmaterials, Steinwolle-Wärmedämmmaterials und eines Schaumstoff-Wärmedämmmaterials.

Ferner zeigt die mit der Wärmedämmung behandelte Holzfaser eine flammhemmende und feuerbeständige Eigenschaft und eine angemessene Ameisenabwehrwirkung.

Hinsichtlich der flammhemmenden Eigenschaft und der Feuerbeständigkeit zeigt das Wärmedämmmaterial eine gute, mit Glaswolle nicht vergleichbare flammhemmende Eigenschaft und Feuerbeständigkeit, ist als Verbundelement mit einer Bauplatte wirksamer als halbfeuerfest und ermöglicht die Entwicklung eines neuartigen feuerbeständigen und wärmedämmenden Baumaterials, da die Oberfläche des Wärmdämmmaterials, selbst wenn es Feuer und Hitze ausgesetzt ist, eine karburierte Wärmedämmschicht bildet.

Weiterhin ist insbesondere die schallisolierende Wirkung im niedrigen Frequenzbereich sehr hoch.

Da das Wärmedämmmaterial gemäß der vorliegenden Erfindung ein natürliches Material ist und aus biologisch abbaubaren Materialien zusammengesetzt ist, belastet das Wärmedämmmaterial als Abfallmaterial nicht die Umwelt, selbst wenn es zurückgelassen wird und mit Düngerkomponenten verdoppelt wird; deshalb kann es als Aufzuchtmatte und Düngevlies verwendet werden und zeigt dabei eine Wirkung für die Aktivierung von Wäldern und ausgedünnten Hölzern, einschließlich einer Umweltreinigungswirkung.

### Bezugszeichenliste

- 1: Holzspäne
- 2: Biologisch abbaubares Bindemittel (pulverförmig)
- 3: Holzfaser
- 4: Zusatzstoff
- 5: Biologisch abbaubares Bindemittel (faserförmig)
- 6: Schritt zur Verarbeitung der Holzspäne
- 7: Schritt zur Behandlung mit einen flammhemmenden Ameisenabwehrmittel
- 8: Dampfbehandlung und Fibrillation (Refiner)
- 9: Schritt der Feuchtigkeitsregulierung (Steuerung des Wassergehalts)
- 10: Schritt der Dispersion durch Mischen (Trommelsieb)
- 11: Schritt des Sammelns und Verteilens der Flocken durch das Trockenverfahren (Formung durch den Förderer)
- 12: Schritt des Formpressens durch das Trockenverfahren (Formung durch den Förderer)
- 13: Zusatzstoff
- 14: Holzfaser
- 15: Biologisch abbaubares Bindemittel (faserförmig)
- 16: Schritt der Papierherstellung durch Trockenverfahren (nahe Vorgabe)
- 17: Schritt der Filzbildung
- 18: Schritt der Befeuchtung und der Warmformung durch das Halbtrockenverfahren (Formung durch Förderer)
- 19: Schritt der Warmformung durch das Trockenverfahren (Formung durch Förderer)
- 20: Schritt der Feuchtigkeitsregulierung und Aushärtung
- 21: Schritt des Schneidens und der Endbearbeitung
- 22: Wärmdämmprodukt

## Patentansprüche

1. Biologisch abbaubares Wärmedämmmaterial, enthaltend 50 bis 90 Gew.-% einer Zellulose- und/oder Holzfaser mit einem durchschnittlichen Faserdurchmesser von 1 mm oder weniger und einer durchschnittlichen Faserlänge von 20 mm oder weniger, 2 bis 15 Gew.-% eines flammhemmenden Mittels sowie 5 bis 30 Gew.-% eines biologisch abbaubaren Bindemittels in Form von Biko-Fasern mit einem durchschnittlichen Faserdurchmesser von 1 mm oder weniger und einer Faserlänge von 20 mm oder weniger, wobei die Dichte des Wärmedämmmaterials 30 bis 300 kg/m³ beträgt.

2. Biologisch abbaubares Wärmedämmmaterial, enthaltend 50 bis 90 Gew.-% einer Holzfaser mit einem durchschnittlichen Faserdurchmesser von 1 mm oder weniger und einer durchschnittlichen Faserlänge von 20 mm oder weniger, 2 bis 15 Gew.-% eines flammhemmenden und vorzugsweise Ameisen abwehrenden Mittels mit einer Düngerkomponente und 5 bis 30 Gew.-% eines biologisch abbaubaren Bindemittels mit einem durchschnittlichen Faserdurchmesser von 1 mm oder weniger oder einer Feinheit von 10 dtex oder weniger und einer Faserlänge von 20 mm oder weniger als Hauptbestandteile, wobei die Dichte des Wärmedämmmaterials 30 bis 300 kg/m³ beträgt und wobei das Wärmedämmmaterial eine Wärmedämmungseigenschaft, eine thermische Entspannungseigenschaft, eine Schalldämmungseigenschaft, eine Flammhemmungseigenschaft und eine Feuerbeständigkeitseigenschaft, eine Ameisenabwehreigenschaft, eine Feuchtigkeitsregulierungseigenschaft sowie eine Umweltschutz- und Entgiftungseigenschaft besitzt.

3. Biologisch abbaubares Wärmedämmmaterial nach Anspruch 1 oder 2, wobei die Holzfaser eine Stapelfaser mit einem durchschnittlichen Faserdurchmesser von 1 mm oder weniger und einer durchschnittlichen Faserlänge von 20 mm oder weniger ist, die gewonnen wird durch das Dämpfen und Fibrillieren von dünnen Hölzern wie Koniferen, Breitblattbäume und Monokotyledonen, Holzspäne von alten Hölzern, Späne zäher Rinden und/oder Sägewerkreste.

4. Biologisch abbaubares Wärmedämmmaterial nach Anspruch 1 oder 2, wobei das mit einer Düngerkomponente verdoppelte flammhemmende Ameisenabwehrmittel die Mischung einer Borverbindung und einer Phosphorverbindung enthält.

5. Biologisch abbaubares Wärmedämmmaterial nach Anspruch 1 oder 2, wobei das biologisch abbaubare Bindemittel synthetische und natürliche Verbundmaterialien wie heißwasserlösliches Poval, Stärke, CMC und Chitosan und Verbundmaterialien wie biologisch abbaubares Polyolefin, Polyester und Caprolactam umfasst und seine Fasern einen durchschnittlichen Faserdurchmesser von 1 mm oder weniger oder eine Feinheit von 10 dtex oder weniger und eine Faserlänge von 20 mm oder weniger aufweisen.

6. Biologisch abbaubares Wärmedämmmaterial nach einem der Ansprüche 1 bis 5, wobei das Wärmedämmmaterial eine Vliesform, Plattenform oder Filzform aufweist.

7. Biologisch abbaubares Wärmedämmmaterial nach einem der Ansprüche 1 bis 6, wobei das Wärmedämmmaterial eine Plattenform aufweist, die eine Sandwichstruktur hat, deren obere und untere Schichten eine hohe Dichte aufweisen und bei der eine mittlere Kernschicht eine geringe Dichte aufweist und wobei die durchschnittliche Dichte des Wärmedämmmaterials 100 bis 300 kg/m³ beträgt.

8. Biologisch abbaubares Wärmedämmmaterial nach einem der Ansprüche 1 bis 7, wobei das Wärmedämmmaterial eine Platte ist, die eigentlich behandelt ist, um ihre luftdichte Isoliereigenschaft, ihre luftdichte flammhemmende und feuerbeständige Eigenschaft und ihre luftdichte Schalldämmungseigenschaft zu verbessern.

9. Biologisch abbaubares Wärmedämmmaterial nach einem der Ansprüche 1 bis 6, wobei das filzförmige Wärmedämmmaterial auf einer oder auf beiden Seiten mit einem biologisch abbaubaren Vliesstoff mit einem Gewicht pro Schuss von 100 g/m² oder weniger kaschiert ist.

10. Biologisch abbaubares Wärmedämmmaterial nach einem der Ansprüche 1 bis 6, das als Steckling-Aufzuchtmatte oder als Düngevlies verwendet wird, die aus einem Vlies und einem Filz des Wärmedämmmaterials hergestellt sind.

11. Verfahren zur Herstellung eines Vlieses oder einer Platte aus dem biologisch abbaubaren Wärmedämmmaterial nach den Ansprüchen 1 bis 7, umfassend ein Trockenverfahren, das die Mischung durch Dispersion, das Sammeln und Verteilen der Flocken und das Pressformen einschließt, und ein Halbtrockenverfahren, das die Formung unter Befeuchtung und die Formung unter Erwärmung einschließf.

12. Verfahren zur Herstellung eines Filzes aus dem biologisch abbaubaren Wärmedämmmaterial nach den Ansprüchen 1 bis 6, umfassend das Luftlege-Trockenverfahren und ein Halbtrockenverfahren, einschließlich einer Formung unter Befeuchtung und einer Formung unter Erwärmung.

13. Verfahren zur Herstellung von Holzfaser, umfassend die Behandlung von Holzspänen mit dem flammhemmenden Ameisenabwehrmittel, das mit einer Düngerkomponente verdoppelt ist, und Dämpfen und Fibrillieren der Holzspäne, in dem biologisch abbaubaren Wärmedämmmaterial nach Anspruch 1 oder 2.

14. Pressformverfahren für die sekundäre Verarbeitung des Wärmedämmmaterials nach einem der Ansprüche 1 bis 6, umfassend das Formen eines einschichtigen oder mehrschichtigen Filzes aus einer Vielzahl von laminierten Schichten des Wärmedämmmaterials durch Pressformen unter Befeuchtung und durch Formen unter Erwärmung, um einen Formkörper aus dem Wärmedämmmaterial oder einem akustischen Material herzustellen.
